# NOUVEAU FASCICULE DE BREVET EUROPEEN

(11) **EP 0 763 420 B2**
(45) Date de publication et mention de la décision concernant l'opposition: **02.01.2004**
(45) Mention de la délivrance du brevet: 08.03.2000
(21) Numéro de dépôt: 96401706.5
(22) Date de dépôt: 31.07.1996
(51) Int. Cl.: B32B 17/10, B60J 1/00, E06B 3/66, C03C 27/12

(54) **Vitrage feuilleté d'isolation acoustique**
Verbundglasscheibe mit Schallisolierung
Sound damping laminated glazing

(30) Priorité: 15.09.1995 FR 9510837
(43) Date de publication de la demande: 19.03.1997
(73) Titulaire: SAINT GOBAIN GLASS FRANCE, 92400 Courbevoie (FR)
(72) Inventeur: Rehfeld, Marc, 95460 Ezanville (FR)
(74) Mandataire: Muller, René

(56) Documents cités:
- EP-A- 0 100 701
- EP-A- 0 204 188
- EP-A- 0 387 148
- EP-A- 0 606 040
- DE-A- 3 201 687
- DE-B- 1 115 452
- JP-A- 4 317 443
- JP-A- 5 138 840
- JP-A- 6 135 748
- JP-A- 6 191 904
- US-A- 3 816 201
- US-A- 3 823 794

## Description

L'invention concerne un vitrage feuilleté d'isolation acoustique comportant au moins un film plastique qui lui donne des propriétés d'amortissement élevé ou de raideur faible. De tels vitrages sont en général destinés à équiper des véhicules ou des bâtiments de manière à diminuer à l'intérieur, la perception des bruits extérieurs.

D'une manière générale, les performances d'isolation acoustique de vitrages à base de verre flotté silico-sodo-calcique d'une épaisseur globale donnée sont améliorées si plusieurs plaques de verre sont associées grâce à un film de matière plastique pour constituer un ensemble feuilleté.

En utilisant des couches ou des films spéciaux. étudiés pour leurs performances acoustiques notamment leur coefficient d'amortissement élevé ou leur faible raideur. on améliore encore les résultats. Malheureusement. ces intercalaires sont souvent chères ou bien ne possèdent pas les propriétés mécaniques nécessitées par leurs conditions d'emploi. C'est le cas par exemple si l'on souhaite disposer d'un vitrage bâtiment de sécurité ou si le vitrage automobile est un pare-brise. Un problème que l'invention cherche à résoudre est d'obtenir de bonnes performances acoustiques tout en n'utilisant que des épaisseurs faibles pour les résines acoustiques spéciales qui constituent l'intercalaire.

II est connu d'améliorer l'isolement acoustique d'un véhicule par rapport aux bruits aérodynamiques grâce à l'utilisation d'une résine spéciale dans le vitrage feuilleté. Le brevet européen EP-B-0 387 148 propose ainsi d'atteindre un indice d'affaiblissement acoustique qui ne se différencie pour aucune des fréquences supérieures à 800 Hz de plus de 5 dB d'un indice de référence augmentant de 9 dB par octave jusqu'à 2 000 Hz et de 3 dB par octave aux fréquences supérieures grâce à un verre feuilleté dont l'intercalaire possède un amortissement à la flexion ν=Δf/f_{c} supérieur à 0, 15, cette valeur étant déterminée par une mesure effectuée en excitant par un choc un barreau feuilleté de 9 cm de longueur et 3 cm de largeur fait d'un verre feuilleté où la résine d'une épaisseur de 2 mm est entre deux verres épais chacun de 4 mm, et en mesurant f_{c}, fréquence de résonance du premier mode appelée également fréquence « critique » et Δf. largeur du pic à une amplitude A/√2 où A est l'amplitude maximum à la fréquence f_{c}. Dans ce document, les feuilles intercalaires des vitrages feuilletés acoustiques faites de la résine qui possède les caractéristiques précédentes ont des épaisseurs importantes. de 1.1 mm et 1.5 mm dans les deux exemples cités dans le document.

Dans un autre domaine de la protection acoustique, celui où il s'agit de protéger un bâtiment contre les bruits routiers. le brevet européen EP-B-0 100 701. propose un vitrage acoustique comprenant au moins un vitrage feuilleté.
caractérisé en ce que la résine du vitrage feuilleté est telle qu'un barreau de 9 cm de longueur et de 3 cm de largeur constitué d'un verre feuilleté comprenant deux feuilles de verre de 4 mm d'épaisseur réunies par une couche de 2 mm de cette résine, ait une fréquence critique qui diffère au plus de 35 % de celle d'un barreau de verre ayant la même longueur, la même largeur de 4 mm d'épaisseur.

Le critère caractérisant la résine retenu ici est différent puisqu'il s'agit de la fréquence « critique » d'un barreau feuilleté proprement dite. grandeur qui varie avec la raideur de la résine alors que dans EP-B-0 387 148, c'était la largeur du « pic » de la même fréquence cntique qui était la grandeur caractéristique. variant. elle. avec l'amortissement de la résine constituant l'intercalaire du vitrage feuilleté. Ici aussi. les exemples retenus utilisent des épaisseurs de résine importantes. 2 mm.

Ces résines à hautes performances acoustiques sont des produits chers. en particulier parce qu'ils sont produits en quantités faibles. On voudrait pouvoir réduire l'épaisseur du film intercalaire mais néanmoins. pouvoir garder les performances exigées habituellement des vitrages feuilletés, en particulier du point de vue de la sécurité.

Il est également connu d'associer plusieurs films faits chacun d'une résine acoustique différente de manière à obtenir une performance acoustique combinant les avantages de chacune des résines prise isolément en particulier en ce qui concerne la gamme de températures où chacune d'elles est efficace. Un brevet des Etats-Unis. US 5 340 654 et plusieurs demandes de brevet japonaises. notamment JP 06-135 748. JP 03-124 441. JP 05-310 449 ou JP 06-115 980 concernent ces techniques. Ce type d'assemblage. au lieu de diminuer l'épaisseur de film acoustique (et cher) nécessaire, l'accroit et ne va pas dans le sens souhaité : diminution des épaisseurs des films acoustiques pour en réduire le coût.

On connait également d'après le document JP 06-191 904 un vitrage feuilleté comportant deux substrats verriers de 3 mm d'épaisseur chacun, un intercalaire à performances d'isolation acoustique de 0,38 mm d'épaisseur et deux intercalaires en PVB standard de 0,38 mm d'épaisseur chacun, l'intercalaire à performances d'isolation acoustique étant feuilleté entre les deux intercalaires en PVB standard. Cette structure de vitrage permet d'éviter une baisse de l'indice d'affaiblissement acoustique à la fréquence de coincidence de 2000 Hz.

Dans un autre domaine. où l'on cherche à donner à des vitrages feuilletés. des caractéristiques de conduction électrique ou de réflexion ou d'absorption pour le rayonnement solaire, il est connu d'associer un film mince support d'un système de couches métalliques ou diélectriques avec des feuilles de polyvinylbutyral entre plaques de verre pour réaliser des vitrages feuilletés fonctionnels.

Dans le brevet des Etats-Unis US 3 718 535 un film support en polyester de polyéthylène téréphtalate (PET) d'une épaisseur comprise entre 0.006 et 0.380 mm est recouvert d'une couche mince métallique par les techniques de dépôt sous vide. évaporation ou pulvérisation. Le film support est associé de part et d'autre à deux films thermoplastiques. de préférence en butyral de polyvinyle (PVB).

Dans un autre document plus récent, la demande internationale WO 94/21 838 on montre des assemblages feuilletés à base de PVB entre verres dans lesquels des feuilles de PVB enserrent un film de PET de. par exemple 0,05 mm, le PET étant lui-même recouvert d'un ensemble de couches alternant des couches de métal (Ag recouvert de Au) et des couches diélectriques (notamment oxyde d'indium ou oxyde d'indium-étain) pour donner au vitrage des propriétés anti-solaires ou conductrices.

L'invention se donne pour tâche de fournir un vitrage feuilleté avec de bonnes propriétés acoustiques et une tenue mécanique correcte, notamment en tant que vitrage de sécurité, avec une épaisseur de résine acoustique aussi réduite que possible.

Pour atteindre ce but. l'invention propose un vitrage feuilleté d'isolation acoustique comportant au moins deux plaques rigides transparentes ainsi qu'au moins un film plastique lui donnant des propriétés d'amortissement et/ou de raideur à base de résine d'acétal de polyvinyle auquel est associé au moins un film de performances acoustiques banales, caractérisé en ce que les plaques rigides transparentes ont une épaisseur comprise entre 1,6 et 2,1 mm, le film donnant des propriétés d'ammortissement et/ou de raideur présente une épaisseur inférieure à 1,1 mm, le film de performances acoustiques banales, est un film de polyvinylbutyral standard tel que:
* soit lorsque. dans une épaisseur de 2 mm, il est associé dans un ensemble feuilleté avec deux verres de 4 mm pour constituer un barreau feuilleté de 9 cm de longueur et 3 cm de largeur et qu'on excite par un choc le barreau, la fréquence de résonance du premier mode, f_{c} diffère de plus de 35 % de celle d'un barreau en verre monolithique ayant la même longueur. la même largeur et 4 mm d'épaisseur,
* soit lorsque, dans une épaisseur au maximum de 1 mm, il est associé dans un ensemble feuilleté avec deux verres de 2,1 mm pour constituer une plaque feuilletée dont on mesure l'indice d'affaiblissement acoustique celui-ci s'écarte pour les fréquences supérieures à 800 Hz. de plus de 6 dB d'un indice de référence augmentant de 9 dB par octave jusqu'à 2 000 Hz et de 3 dB par octave aux fréquences supérieures.

La technique de l'invention permet de substituer à un film acoustique cher, un film banal et bon marché sans dégradation des propriétés acoustiques mais avec, en général, une sensible amélioration des propriétés de tenue mécanique. avec également toute la gamme des propriétés additionnelles que procure notamment le PVB : couleurs, anti-UV, diffusion de la lumière

De préférence, le film plastique donnant des propriétés d'amortissement et/ou de raideur est séparé du film de performances acoustiques banales par un film mince étanche. Celui-ci est avantageusement à base de polyéthylène téréphtalate (PET).

Selon une variante, le film plastique donnant des propriétés de raideur est fait d'une résine telle que le même barreau de 9 cm de longueur et de 3 cm de largeur, constitué d'un verre feuilleté comprenant deux feuilles de verre de 4 mm d'épaisseur réunies par une couche de 2 mm de cette résine, ait une fréquence de résonance du premier mode, f_{c} qui diffère au plus de 35 % de celle d'un barreau de verre ayant la même longueur. la même largeur et 4 mm d'épaisseur et selon une deuxième variante, le film plastique donnant des propriétés d'amortissement est fait d'une résine telle que. lorsque, dans une épaisseur inférieure ou égale à 1 mm, il est associé dans un ensemble feuilleté avec deux verres de 2,1 mm pour constituer une plaque feuilletée dont on mesure l'indice d'affaiblissement acoustique. celui-ci s'écarte. pour les fréquences supérieures à 800 Hz. de moins de 6 dB d'un indice de référence augmentant de 9 dB par octave jusqu'à 2 000 Hz et de 3 dB par octaves aux fréquences supérieures.

La première de ces variantes s'applique de préférence aux vitrages bâtiment. notamment pour une bonne protection contre les bruits routiers et la deuxième. aux véhicules. spécialement lorsqu'il s'agit de se protéger des bruits aérodynamiques.

De préférence, selon l'invention, les épaisseurs du film acoustique comme du film standard sont supéneures
ou égales à 0.38 mm.

L'invention propose également que lorsqu'il est présent. le film mince étanche comporte à sa surface une ou plusieurs couches minces qui modifient ses propriétés de réflexion ou de transmission lumineuse et/ou sa conduction électrique. De même, il est également prévu que l'une au moins des deux plaques rigides transparentes comporte. notamment sur sa surface interne, une ou plusieurs couches minces qui modifient ses propriétés de réflexion ou de transmission lumineuse et/ou sa conduction électrique.

L'invention concerne également l'utilisation d'un film en tant qu'intercalaire dans un vitrage feuilleté tel qu'il fournisse au vitrage des propriétés d'amortissement et/ou de raideur à base de résine d'acétal de polyvinyle, ce film étant associé à au moins un film de performances acoustiques banales, caractérisé en ce que le vitrage comporte au moins deux plaques rigides transparentes d'épaisseur comprise entre 1,6 et 2,1 mm, le film donnant des propriétés d'amortissement et/ou de raideur présente une épaisseur inférieure à 1,1mm, et le film de performances acoustiques banales a des propriétés de tenue mécanique et est un film de polyvinylbutyral standard tel que:
- soit lorsque dans une épaisseur de 2 mm, il est associé dans un ensemble feuilleté avec deux verres de 4 mm pour constituer un barreau feuilleté de 9 cm de longueur et 3 cm de largeur et qu'on excite par un choc le barreau, la fréquence de résonance du premier mode, f_{c} diffère de plus de 35% de celle d'un barreau en verre monolithique ayant la même longueur, la même largeur et 4 mm d'épaisseur,
- soit lorsque dans une épaisseur au maximum de 1 mm, il est associé dans un ensemble feuilleté avec deux verres de 2,1 mm pour constituer une plaque feuilletée dont on mesure l'indice d'affaiblissement acoustique, celui-ci s'écarte pour les fréquences supérieures à 800 Hz, de plus de 6 dB d'un indice de référence augmentant de 9 dB par octave jusqu'à 2000 Hz et de 3 dB par octave aux fréquences supérieures,
en vue d'améliorer les performances acoustiques du vitrage sur toute l'étendue des fréquences comprises entre 1000 et 4000 Hz par rapport aux performances d'un vitrage utilisant un PVB standard.

La description et les figures permettront de comprendre le fonctionnement de l'invention et d'en saisir tous les avantages.

Parmi les figures :
- la **figure 1** représente le vitrage feuilleté de l'invention avec juxtaposition d'une feuille de résine acoustique et d'une feuille de résine standard.
- la **figure 2.** les mémes feuilles mais avec. entre elles, un film mince étanche.
- quant à la **figure 3,** elle montre les résultats des mesures d'indice d'affaiblissement acoustique sur les vitrages de l'invention.

Les **figures 4, 5 et 6** concernent la méthode utilisée pour mesurer l'amortissement et pour apprécier la raideur des résines acoustiques.

Les résines acoustiques efficaces comme intercalaires de vitrages feuilletés sont connues pour agir soit sur l'amortissement, soit sur la raideur des vitrages qu'elles équipent.

Pour les acousticiens, les phénomènes vibratoires dans des plaques feuilletées sont régis par des lois tout-à-fait analogues à celles régissant l'association mécanique entre deux masses réunies par un ressort et un amortisseur montés en parallèle. De même que les équations des mouvements de l'ensemble masse-ressort-masse permettent d'accéder aux grandeurs mécaniques caractéristiques du ressort (sa raideur) et de l'amortisseur (l'amortissement), l'analyse du comportement mécanique d'un barreau constitué par l'association de deux verres, par exemple de 4 mm assemblés, notamment par 2 mm de la résine concernée permet d'accéder aux grandeurs ν, l'amortissement et à la raideur K de la résine testée qui permettent aux spécialistes de prévoir l'efficacité acoustique de vitrages feuilletés faits avec la résine en question.

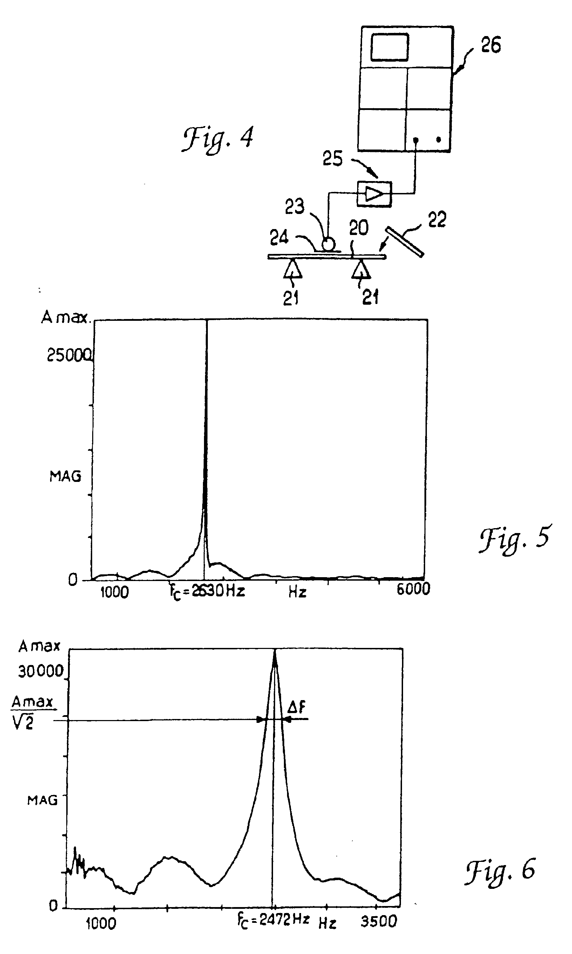

On va maintenant décrire, en référence à la **figure 4**, la première méthode qui permet de faire le choix d'une résine utilisable dans le cadre de l'invention et de définir ce qu'on entend par « film de résine standard » ou « film de performances acoustiques médiocres ».

On sait que l'énergie acquise par un objet soumis à un choc engendre un phénomène de vibration et qu'aussitôt après le choc, l'objet redevenu libre vibre suivant son mode propre. A chaque mode est associée une fréquence de vibration. L'amplitude de la vibration dépend de l'excitation initiale, c'est-à-dire de la composante spectrale du choc (amplitude du choc à la fréquence étudiée) et de la zone d'impact du choc, la déformation modale étant plus ou moins importante selon que le choc se produit à un ventre ou à un noeud de vibration.

Pour qu'un mode propre soit excité, il faut :
(1) que la déformation provoquée au point d'impact ne se situe pas sur un noeud de vibration du mode,
(2) que le spectre d'énergie de choc ait une composante à la fréquence de résonance du mode.

Cette dernière condition est pratiquement toujours remplie, car un choc très bref présente un spectre d'énergie pratiquement uniforme.

La première condition est également remplie et, pour un barreau libre à ses extrémités, par exemple, il suffit de taper à l'une des extrémités pour exciter tous les modes.

En réalité, on n'arrive à « mesurer » que les dix premiers modes, au maximum. L'énergie vibratoire acquise par un choc se dissipe au cours du temps et ce d'autant plus rapidement que le matériau est plus amorti.

Pour un matériau donné, les modes se dissipent d'autant plus vite que la fréquence de résonance associée est plus élevée, de sorte qu'au bout d'un certain temps, et pendant une certaine durée, seul le premier mode subsiste.

Le principe de la mesure consiste donc à effectuer l'analyse des fréquences de vibration d'un barreau soumis à un choc et à repérer la position des fréquences de résonance (fréquences pour lesquelles l'amplitude de vibration est nettement plus importante que dans le reste du spectre).

Pour effectuer la mesure (**figure 4**) on utilise successivement des barreaux 20 de 9 cm de longueur et de 3 cm de largeur, d'abord en un verre de 4 mm d'épaisseur, puis en un verre feuilleté 4(2)4 dans lequel des feuilles de verre de 4 mm d'épaisseur sont assemblées par une couche de 2 mm d'épaisseur de la résine à tester.

Le barreau 20 repose sur deux supports de mousse 21, placés sensiblement aux noeuds de vibration du premier mode (mode fondamental) de flexion dynamique du barreau. Celui-ci est excité par un choc exercé en frappant l'une de ses extrémités libres par un petit objet, tel qu'une règle.

La réponse transitoire du barreau à cette excitation est recueillie par un microphone 23, disposé sur un support 24, très près de la surface du barreau 20, au milieu de celui-ci (ventre de pression). Le signal temporel recueilli par le microphone 23 est amplifié par l'amplificateur 25, puis analysé en fréquence par un analyseur de Fourier 26.

On procède en général à une dizaine d'essais pour un même barreau 20, afin de réduire l'influence des bruits extérieurs.

Comme on le voit sur les **figures 5 et 6** les courbes obtenues, qui représentent l'amplitude A des vibrations en fonction de la fréquence de celles-ci respectivement pour un barreau de verre monolitique et pour un barreau de verre feuilleté comprenant une résine à tester dans le cadre de la présente invention, permettent de déceler avec précision la fréquence de résonance du mode fondamental de vibration de flexion (fréquence critique). Dans les exemples représentés, la fréquence critique du barreau de verre est de 2630 Hz, tandis que celle du barreau de verre feuilleté est de 2472 Hz.

Pour accéder à la raideur K de la résine testée, on se contente le plus souvent de la valeur de cette fréquence « critique » f_{c} ou plus exactement de la fréquence de résonance du premier mode du barreau, qui est liée à K.

Du point de vue de la raideur, donc de la fréquence « critique » f_{c}, la limite entre un produit feuilleté banal en acoustique ou, au contraire, efficace se trouve aux environs d'une fréquence « critique » de 3 550 Hz. Les produits faits avec des résines dont f_{c} est inférieure à cette valeur sont des produits performants acoustiquement tandis que les vitrages feuilletés dont la résine a une f_{c} supérieure à 3 550 Hz sont médiocres. C'est le cas des feuilletés à base de PVB. En effet, à la température de 20°C, cette fréquence « critique » est de 4 500 Hz.

Le test qui vient d'être décrit et qui est d'une grande simplicité de mise en oeuvre permet également de déterminer l'amortissement à la flexion ν du barreau 20, que l'on définit comme le rapport Δf/f_{c} où Δf représente la différence des fréquences correspondant à une amplitude égale à celle de la fréquence « critique » f_{c} divisée par √2. C'est l'amortissement ν qui permet de sélectionner les résines efficaces selon le brevet EP-B-0 387 148, celles-ci permettent d'obtenir des vitrages feuilletés performants pour affaiblir les bruits d'origine aérodynamique dans les véhicules. C'est ce critère, celui d'un verre feuilleté efficace contre les bruits aérodynamiques qui est retenu ici. Le test consiste à réaliser un vitrage feuilleté avec deux verres de 2,1 mm et à les associer avec au plus 1 mm de la résine à tester et enfin de mesurer l'indice d'affaiblissement acoustique du vitrage selon la norme ISO 140. On compare alors chaque valeur obtenue pour les fréquences supérieures à 800 Hz à celle d'un indice de référence augmentant de 9 dB par octave jusqu'à 2 000 Hz et de 3 dB par octave aux fréquences supérieures. Pour faire cette comparaison, pour chacune des fréquences concernées, on fait la différence des deux valeurs d'indice. Parmi tous ces écarts, on choisit le plus grand et le plus petit et on en fait la différence. La moitié de celle-ci constitue « l'écart » entre les deux courbes. Si cet écart est inférieur à 6 dB, le feuilleté concerné et donc la résine qui le constitue, ont une grande efficacité acoustique contre les bruits aérodynamiques d'un véhicule en déplacement. En revanche, lorsque cet écart est supérieur à 6 dB la résine est considérée comme acoustiquement médiocre.

Selon les applications, c'est-à-dire, en fait selon la nature des bruits dont on veut se protéger, bruits d'origine aérodynamique dans un véhicule, bruits de route, bruits de voix entre pièces voisines. - la condition à respecter par une résine acoustique efficace dans un vitrage feuilleté se définit par une « fourchette » » à l'intérieur de laquelle doit se trouver, soit sa fréquence « critique » f_{c}, soit l'écart entre les courbes qu'on vient de définir, soit l'une et l'autre de ces grandeurs.

C'est ainsi qu'une famille de résines d'acétal de polyvinyle décrite dans la publication « *Effect of molecular structure of the interlayer on the transmission loss of laminated glass* » présentée à « Inter-noise 94 » (Yokohama, Japon, 29-31 août 1994) possède plusieurs polymères qui permettent de respecter à la fois l'un et l'autre des critères précédents.

Les résines développées par les chimistes organiciens pour des applications acoustiques sont souvent chimiquement complexes, leur mise au point a nécessité de longs essais faisant intervenir des spécialistes de plusieurs disciplines scientifiques et par ailleurs les marchés concernés ne sont pas très grands, il s'ensuit que ces produits sont souvent très chers.

L'idée d'associer une telle résine acoustique en épaisseur aussi mince que possible avec une intercalaire banale, usuelle dans les vitrages feuilletés, comme par exemple le butyral de polyvinyle paraît a priori saugrenue. II est en effet bien connu, qu'en acoustique, dans une chaîne, c'est toujours le maillon le plus faible qui joue seul. Dans ces conditions, on aurait dû s'attendre que, notamment la combinaison résine acoustique -PVB fournisse un vitrage feuilleté aussi faible acoustiquement que celui avec le PVB seul.

La demanderesse a osé tenter l'expérience et le résultat est surprenant : même lorsque le film acoustiquement banal est sensiblement plus épais que le film de résine acoustique, les résultats acoustiques sont conservés.

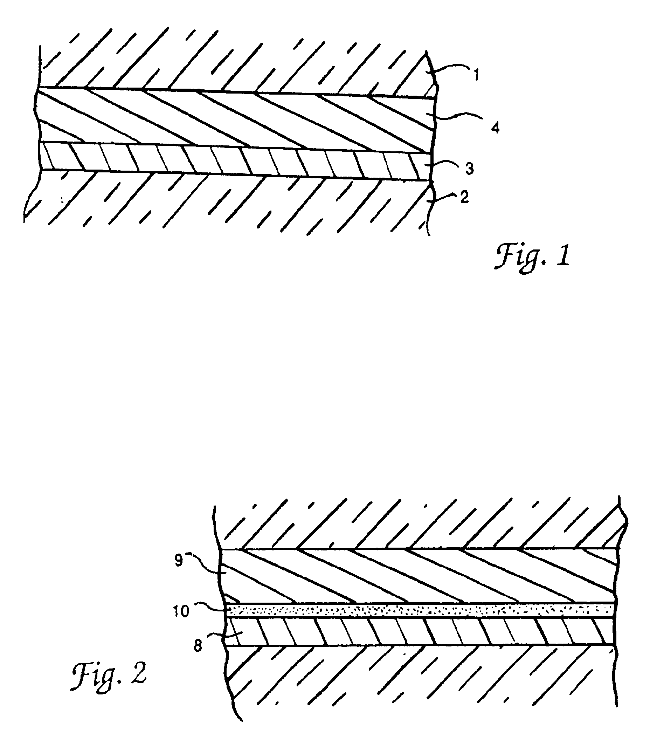

Sur la **figure 1** on voit un vitrage feuilleté selon l'invention. Il est constitué de deux plaques de matériau rigide transparent comme du polycarbonate, du polymétacrylate de méthyle et de préférence de deux plaques de verre 1, 2. Leur épaisseur est déterminée pour des raisons extérieures à l'invention comme par exemple les règlements concernant les vitrages de façade ou les pratiques de l'industrie automobile. En 3, on voit le film de résine acoustique. Il est associé avec une couche d'une résine traditionnelle pour faire des intercalaires de vitrage feuilleté comme le polyuréthane ou le polyvinylbutyral standard 4, il s'agit là de produits traditionnels, acoustiquement normaux et qui n'ont subi aucune modification pour leur donner des qualités particulières de raideur ou d'amortissement. En revanche, il peut s'agir de films traditionnels comme en PVB mais colorés, diffusants, anti-UV mais qui, du point de vue acoustique, sont classiques (variante PVB bâtiment ou variante HI pour les pare-brise automobile notamment). L'association des deux films se fait par les moyens habituels de ce genre d'industrie, coextrusion, calandrage.

On a fait de nombreux essais acoustiques avec les combinaisons du type précédent en réalisant avec différentes résines des échantillons de dimensions 1,48 x 1,23 m² avec des épaisseurs de verre identiques pour les deux plaques, de respectivement 1,6 et 2,1 mm.

Les épaisseurs (en mm) des deux films associés dans le cas du PVB étaient successivement :

| | Résine acoustique | PVB |
|---|---|---|
| Exemple comparatif 1 | - | 0,76 |
| Exemple comparatif 2 | 0,50 | - |
| Exemple 3 | 0,50 | 0,38 |
| Exemple comparatif 4 | 1,00 | - |

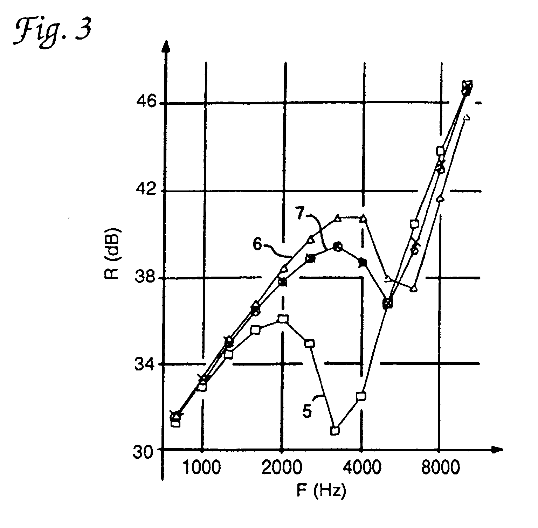

Sur la **figure 3** figurent les résultats des indices d'affaiblissement acoustique selon la norme ISO 140 avec les deux verres de 2,1 mm pour l'exemple comparatif 1 (5), pour l'exemple comparatif 4 (6) et pour la résine acoustique seule de l'exemple comparatif 2 (7). Cette courbe avec les cercles se recouvre pratiquement avec la courbe de l'exemple 3 selon l'invention dont les points de mesure sont figurés par des croix.

Il ressort des mesures précédentes qu'un feuilleté avec une combinaison résine acoustique 0,50 mm + PVB 0,38 mm n'est pas moins bonne que celui comportant la résine acoustique de 0,50 mm seule et est bien meilleur que celui fait avec du PVB de 0,76 mm.

Les essais réalisés avec les échantillons comportant deux verres de 1,6 mm donnent des courbes d'aspect voisin tout aussi spectaculaires.

Sur la **figure 2** on voit un deuxième type de vitrage feuilleté où les deux films, le film acoustique 8 et le PVB standard 9 sont séparés par un film mince 10 fait d'une matière destinée à assurer la séparation chimique des deux autres films 8,9. En effet, la plupart des films destinés à constituer des intercalaires de vitrages feuilletés comportent, en plus du ou des polymères de base, des plastifiants. Il se peut que lorsqu'on associe deux ou plusieurs films ceux-ci comportent des plastifiants incompatibles entre eux ou incompatibles avec le polymère de l'autre film. En ce cas, une séparation matérielle, une barrière à plastifiant, doit être placée entre les films. Ce sera par exemple un film mince (50 µm conviennent) de polyéthylène téréphtalate.

Des essais acoustiques ont été également effectués avec de tels films séparateurs, leurs épaisseurs en mm étaient :

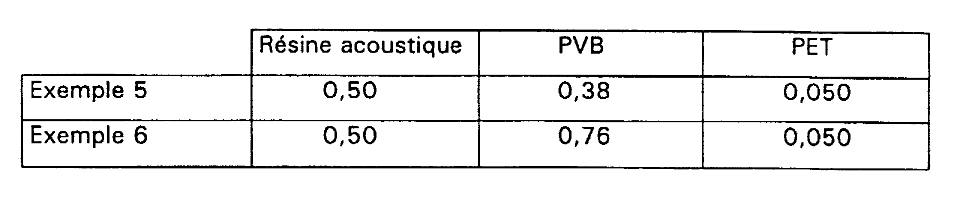

Les résultats acoustiques sont surprenants, on ne constate aucune différence avec l'exemple 3 des essais précédents. Dans le cas des plaques de verre de 2,1 mm d'épaisseur, les indices d'affaiblissement acoustique se confondent avec la courbe 7 de la **figure 3.**

Un essai a été réalisé avec deux films de PVB de 0,38 mm situés de part et d'autre du film en résine acoustique. De nouveau le résultat acoustique a été identique au précédent (exemple 6) on constate ainsi que, peu importe que le film traditionnel comme le PVB soit séparé en deux films de 0,38 ou qu'il soit fait d'un film unitaire de 0,76, l'effet est le même car il ne joue ici aucun rôle acoustique.

Pour évaluer le confort acoustique dans un véhicule en mouvement, le brevet EP-B-0 387 148 propose, on l'a vu, de comparer l'indice d'affaiblissement acoustique de chaque fréquence à un indice, théorique, croissant de 9 dB par octave jusqu'à 2 000 Hz et de 3 dB/octave aux plus hautes fréquences, il prévoit également de définir **une différence des extrêmes,** c'est-à-dire de choisir dans la liste des différences des indices fréquence par fréquence, la plus grande G et la plus petite P pour en faire la différence G-P. Cet écart rendant compte du confort résultant de l'utilisation du vitrage concerné dans un véhicule. Le même document propose d'utiliser également **l'écart-type des différences** précédentes σ qui est représentatif de l'émergence de fréquences désagréables dans un spectre régulier. On a comparé ces critères pou r les vitrages de l'invention dans les épaisseurs 2,1-x-2,1 par rapport aux mêmes vitrages équipés soit de PVB seul (exemple comparatif 1 précédent), soit de résine acoustique seule (exemple comparatif 2 précédent).

Le tableau reprend les résultats :

| | différence des extrêmes (dB) | σ (dB) |
|---|---|---|
| PVB O,76 (ex. comp. 1) | 14 | 4,46 |
| Rés. acoust. O,50 (ex. comp. 2) | 10 | 2,85 |
| Rés. acoust. O,50 + PVB O,38 (ex. 3) | 10 | 2,87 |
| R. ac. O,50 + PET + PVB 0,38 (ex. 5) | 10 | 2,91 |
| R. ac. O,50 + PET + PVB 0,76 (ex. 6) | 11 | 2,99 |

On retrouve dans la colonne « différence des extrêmes » des éléments de comparaison entre résine acoustique (exemple comparatif 2) et produit acoustiquement médiocre (exemple comparatif 1), pour la résine acoustique, l'écart des courbes (demi-différence des extrêmes) est de 5 tandis que pour le PVB, il est de 7.

On constate que les combinaisons associant résine acoustique et PVB sont pratiquement au niveau des vitrages feuilletés faits avec la seule résine acoustique. Ils sont sensiblement meilleurs que ceux utilisant le PVB seul en particulier en ce qui concerne l'émergence de fréquences désagréables (valeur σ).

Les résultats des mesures acoustiques précédentes tout comme les courbes d'indices d'affaiblissement acoustique qui ont servi à les obtenir (**figure 3**) permettent de voir l'efficacité de la solution de l'invention. Grâce à cette dernière, il est possible d'avoir dans le même vitrage feuilleté une protection acoustique associée à toutes les performances que le PVB permet d'obtenir : anti-effraction, anti-UV, couleurs variées, effet diffusant. De même, il est possible, en associant une résine acoustique à une résine (polyuréthane, acétate de polyvinyle), efficace d'un autre point de vue, d'obtenir le cumul des deux fonctions.

Comme on vient de le voir, l'invention permet de combiner une résine performante acoustiquement avec un
ou plusieurs films traditionnels. Ceux-ci, industrialisés depuis de longues années, le PVB en particulier, ont des performances d'adhérence, de tenue en température, de résistance mécanique en cas de choc. optimisées qui les rendent aptes à tous les usages. En particulier, dans la majorité des cas, ils sont capables d'adhérer correctement (ni trop, ni trop peu et cela dans la gamme des températures d'utilisation) sur de nombreuses couches, couches obtenues par dépôt chimique (pyrolyse, CVD) ou sous vide. Dans certains cas, ce sont des couches qui ont été modifiées pour obtenir l'adhérence voulue sur le PVB (voir par exemple la demande DE 42 15 337 ou la demande EP-A-0 433 136). En revanche, les conditions dans lesquelles des feuilletés, réalisés avec des résines performantes acoustiquement, placées au contact de couches connues, résistent au vieillissement sont inconnues au départ et demanderaient de longues études et vraisemblablement des adaptations longues et difficiles des résines et/ou des couches.

Les techniques de l'invention permettent d'éviter tout contact entre ces résines et les couches grâce à l'inter-position d'un film acoustiquement banal mais aux caractéristiques d'adhérence sur les couches bien maîtrisées.

On a vu plus haut que, dans une de ses variantes, l'invention prévoyait l'usage d'un film étanche placé entre la résine acoustique et le PVB. On introduit normalement un tel film pour séparer chimiquement les deux films fonctionnels mais il peut également jouer un autre rôle et apporter ainsi une nouvelle fonction au vitrage feuilleté, il s'agit essentiellement de la fonction de protection anti-solaire ou de la fonction conducteur électrique.

Ces fonctions sont obtenues par le dépôt sur le film mince, en polyéthylène téréphtalate notamment, d'empilements de couches minces, déposés le plus souvent sous vide et comportant des couches métalliques et des couches diélectriques, notamment à base d'oxydes. C'est ainsi que le brevet des Etats-Unis déjà cité US 3 718 535 réalise un feuilleté chauffant en équipant un film de PET d'une couche métallique à base d'or et de bandes d'amenée de courant.

Lorsque le film étanche de l'invention, notamment en PET est recouvert de systèmes de couches minces diverses, il garde au vitrage feuilleté selon l'invention qu'il équipe, toutes ses propriétés acoustiques mais, il élargit ses possibilités en permettant de le transformer facilement en vitrage anti-solaire ou en vitrage conducteur de l'électricité (chauffant, protection radar, vitrage alarme).

## Revendications

1. Vitrage feuilleté d'isolation acoustique comportant au moins deux plaques rigides transparentes ainsi qu'au moins un film plastique lui donnant des propriétés d'amortissement et/ou de raideur à base de résine d'acétal de polyvinyle auquel est associé au moins un film de performances acoustiques banales, **caractérisé en ce que**
- les plaques rigides transparentes ont une épaisseur comprise entre 1,6 et 2,1 mm;
- le film donnant des propriétés d'amortissement et/ou de raideur présente une épaisseur inférieure à 1,1 mm;
- le film de performances acoustiques banales un film de polyvinylbutyral standard tel que:
- soit lorsque dans une épaisseur de 2 mm, il est associé dans un ensemble feuilleté avec deux verres de 4 mm pour constituer un barreau feuilleté de 9 cm de longueur et 3 cm de largeur et qu'on excite par un choc le barreau, la fréquence de résonance du premier mode, f_{c} diffère de plus de 35% de celle d'un barreau en verre monolithique ayant la même longueur, la même largeur et 4 mm d'épaisseur,
- soit lorsque dans une épaisseur au maximum de 1 mm, il est associé dans un ensemble feuilleté avec deux verres de 2,1 mm pour constituer une plaque feuilletée dont on mesure l'indice d'affaiblissement acoustique, celui-ci s'écarte pour les fréquences supérieures à 800 Hz, de plus de 6 dB d'un indice de référence augmentant de 9 dB par octave jusqu'à 2000 Hz et de 3 dB par octave aux fréquences supérieures.

2. Vitrage feuilleté selon la revendication 1, **caractérisé en ce que** le film plastique donnant des propriétés d'amortissement et /ou de raideur est séparé du film de performances acoustiques banales par un film mince étanche.

3. Vitrage feuilleté selon la revendication 2, **caractérisé en ce que** le film mince étanche est à base de polyéthylène téréphtalate.

4. Vitrage feuilleté selon l'une des revendications 1 à 3, **caractérisé en ce que** le film plastique donnant des propriétés de raideur est fait d'une résine telle qu'un barreau de 9 cm de longueur et de 3 cm de largeur, constitué d'un verre feuilleté comprenant deux feuilles de verre de 4 mm d'épaisseur réunies par une couche de 2 mm de cette résine, ait une fréquence de résonance du premier mode f_{c} qui diffère au plus de 35 % de celle d'un barreau de verre monolithique ayant la même longueur, la même largeur et 4 mm d'épaisseur.

5. Vitrage feuilleté selon l'une des revendications 1 à 4, **caractérisé en ce que** le film plastique donnant des propriétés d'amortissement est fait d'une résine telle que, lorsque dans une épaisseur inférieure ou égale à 1 mm, il est associé dans un ensemble feuilleté avec deux verres de 2,1 mm pour constituer une plaque feuilleté dont on mesure l'indice d'affaiblissement acoustique, celui-ci s'écarte, pour les fréquences supérieures à 800 Hz, de moins de 6 dB d'un indice de référence augmentant de 9 dB par octave jusqu'à 2000 Hz et de 3 dB par octave aux fréquences supérieures.

6. Vitrage feuilleté selon la revendication 4 ou 5, **caractérisé en ce qu'**il est constitué de l'assemblage de deux feuilles de verre réalisé par l'association des films de l'invention dans laquelle le film plastique donnant les propriétés d'amortissement et/ou de raideur a une épaisseur égale ou supérieure à 0,38 mm.

7. Vitrage feuilleté selon la revendication 6, **caractérisé en ce que** le film de performances acoustiques banales a une épaisseur égale ou supérieure à 0,38 mm.

8. Vitrage feuilleté selon la revendication 2 ou la revendication 3, **caractérisé en ce que** le film mince étanche comporte à sa surface une ou plusieurs couches minces qui modifient ses propriétés de réflexion ou de transmission lumineuses et/ou sa conduction électrique.

9. Vitrage feuilleté selon l'une des revendications 1 à 3, **caractérisé en ce que** l'une au moins des deux plaques rigides transparentes comporte, notamment sur sa surface interne, une ou plusieurs couches minces qui modifient ses propriétés de réflexion ou de transmission lumineuses et/ou sa conduction électrique.

10. Application du vitrage feuilleté selon la revendication 4 à la réalisation de vitrages destinés à équiper des bâtiments.

11. Application du vitrage feuilleté selon la revendication 5 à la réalisation de vitrages de véhicule, en particulier de vitrages d'automobile.

12. Utilisation d'un film en tant qu'intercalaire dans un vitrage feuilleté tel qu'il fournisse au vitrage des propriétés d'amortissement et/ou de raideur à base de résine d'acétal polyvinyle, ce film étant associé à au moins un film de performances acoustiques banales, **caractérisé en ce que** le vitrage comporte au moins deux plaques rigides transparentes d'épaisseur comprise entre 1,6 et 2,1 mm, le film donnant des propriétés d'amortissement et/ou de raideur présente une épaisseur inférieure à 1,1 mm, et le film de performances acoustiques banales a des propriétés de tenue mécanique et est un film de polyvinylbutyral standard tel que:
- soit lorsque dans une épaisseur de 2 mm, il est associé dans un ensemble feuilleté avec deux verres de 4 mm pour constituer un barreau feuilleté de 9 cm de longueur et 3 cm de largeur et qu'on excite par un choc le barreau, la fréquence de résonance du premier mode, f_{c} diffère de plus de 35% de celle d'un barreau en verre monolithique ayant la même longueur, la même largeur et 4 mm d'épaisseur,
- soit lorsque dans une épaisseur au maximum de 1 mm, il est associé dans un ensemble feuilleté avec deux verres de 2,1 mm pour constituer une plaque feuilletée dont on mesure l'indice d'affaiblissement acoustique, celui-ci s'écarte pour les fréquences supérieures à 800 Hz, de plus de 6 dB d'un indice de référence augmentant de 9 dB par octave jusqu'à 2000 Hz et de 3 dB par octave aux fréquences supérieures,
en vue d'améliorer les performances acoustiques du vitrage sur toute l'étendue des fréquences comprises entre 1000 et 4000 Hz par rapport aux performances d'un vitrage utilisant un PVB standard.

## Claims

1. Sound insulation laminated glazing having at least two transparent, rigid plates, as well as at least one plastic film giving it stiffness and/or damping properties, based on polyvinyl acetal resin, with which is associated at least one film having commonplace sound performance characteristics, **characterized in that**
- the rigid, transparent plates have a thickness between 1.6 and 2.1 mm,
- the film giving stiffness and/or damping properties having a thickness below 1.1 mm,
- the film having commonplace sound performance characteristics being a standard polyvinyl butyral film such that:
- either when, in a thickness of 2 mm, it is combined in a laminated assembly with two 4 mm glasses for forming a 9 cm long and 3 cm wide laminated bar and the bar is excited by a shock, the resonant frequency of the first mode fc differs by more than 35% from that of a monolithic glass bar having the same length, the same width and a thickness of 4 mm,
- or when, in a maximum thickness of 1 mm, it is combined in a laminated assembly with two 2.1 mm glasses for forming a laminated plate, whereof a transition loss index is measured, the latter differing for frequencies exceeding 800 Hz by more than 6 dB compared with a reference index increasing by 9 dB per octave up to 2000 Hz and 3 dB per octave at higher frequencies.

2. Laminated glazing according to claim 1, **characterized in that** the plastic film giving stiffness and/or damping properties is separated from the film having commonplace sound performance characteristics by a tight thin film.

3. Laminated glazing according to claim 2, **characterized in that** the thin tight film is based on polyethylene terephthalate.

4. Laminated glazing according to one of the claims 1 to 3, **characterized in that** the plastic film giving stiffness properties is formed from a resin such that a 9 cm long and 3 cm wide bar, constituted by a laminated glass having two 4 mm thick glass sheets joined by a 2 mm layer of said resin, has a resonant frequency of the first mode fc differing by at the most 35% from that of a monolithic glass bar having the same length, the same width and a thickness of 4 mm.

5. Laminated glazing according to one of the claims 1 to 4, **characterized in that** the plastic film giving the damping properties is formed from a resin such that when in a thickness equal to or below 1 mm, it is combined in a laminated assembly with two 2.1 mm glasses for forming a laminated plate, whereof the transition loss index is measured, the latter differing, for frequencies exceeding 800 Hz, by less than 6 dB compared with a reference index increasing by 9 dB per octave up to 2000 Hz and 3 dB per octave at higher frequencies.

6. Laminated glazing according to claim 4 or 5, **characterized in that** it is formed from the assembly of two glass sheets produced by the combination of films according to the invention, in which the plastic film giving stiffness and/or damping properties has a thickness equal to or greater than 0.38 mm.

7. Laminated glazing according to claim 6, **characterized in that** the film having commonplace sound performance characteristics has a thickness equal to or higher than 0.38 mm.

8. Laminated glazing according to claim 2 or 3, **characterized in that** the thin tight film has on its surface one or more thin films modifying its reflection or light transmission and/or electrical conduction properties.

9. Laminated glazing according to one of the claims 1 to 3, **characterized in that** at least one of the two rigid, transparent plates has, particularly on its inner surface, one or more thin films modifying its reflection or light transmission and/or electrical conduction properties.

10. Application of the laminated glazing according to claim 4 to the production of glazings intended for equipping buildings.

11. Application of the laminated glazing according to claim 5 to the production of vehicle glazings, particularly car glazings.

12. Use of a film as a spacer in a laminated glazing such that it gives the glazing stiffness and/or damping properties and based on polyvinyl acetal resin, said film being associated with at least one film having commonplace sound performance characteristics, **characterized in that** the glazing comprises at least two rigid, transparent plates having a thickness between 1.6 and 2.1 mm, the film giving the stiffness and/or damping properties having a thickness exceeding 1.1 mm and the film having commonplace sound performance characteristics has mechanical strength properties and is a standard polyvinyl butyral film such that:
- either when, in a thickness of 2 mm, it is combined in a laminated assembly with two 4 mm glasses for forming a 9 cm long and 3 cm wide laminated bar and the bar is excited by a shock, the resonant frequency of the first mode fc differs by more than 35% from that of a monolithic glass bar having the same length, the same width and a thickness of 4 mm,
- or when, in a maximum thickness of 1 mm, it is combined in a laminated assembly with two 2.1 mm glasses for forming a laminated plate, whereof a transition loss index is measured, the latter differing for frequencies exceeding 800 Hz by more than 6 dB compared with a reference index increasing by 9 dB per octave up to 2000 Hz and 3 dB per octave at higher frequencies,
- with a view to improving the sound performance characteristics of the glazing over the entire frequency range between 1000 and 4000 Hz compared with the performance characteristics of a glazing using a standard PVB.

## Patentansprüche

1. Schalldämm-Verbundglas, das mindestens zwei transparente starre Scheiben sowie wenigstens eine Kunststoffolie auf der Basis eines Polyvinylacetalharzes, die ihm Dämm- und/oder Steifigkeitseigenschaften verleiht und mit welcher mindestens eine Folie mit gewöhnlichen Schalldämpfungseigenschaften verbunden ist, umfaßt, **dadurch gekennzeichnet, daß**
- die Dicke der transparenten starren Scheiben 1,6 bis 2,1 mm beträgt,
- die Dicke der Dämm- und/oder Steifigkeitseigenschaften verleihenden Folie weniger als 1,1 mm beträgt und
- die Folie mit gewöhnlichen Schalldämpfungseigenschaften eine Standard-Polyvinylbutyralfolie derart ist, daß
- entweder, wenn sie mit einer Dicke von 2 mm in einem mehrschichtigen Aufbau mit zwei Gläsern von 4 mm verbunden ist, um einen Verbund-Versuchsstab von 9 cm Länge und 3 cm Breite zu bilden, und der Versuchsstab durch einen Stoß angeregt wird, die Resonanzfrequenz f_{c} der ersten Mode um mehr als 35 % von der eines Versuchsstabs aus Einscheibenglas mit derselben Länge, derselben Breite und 4 mm Dicke differiert oder
- wenn sie mit einer Dicke von höchstens 1 mm in einem mehrschichtigen Aufbau mit zwei Gläsern von 2,1 mm verbunden ist, um eine Verbundglasscheibe zu bilden, deren Schalldämm-Maß gemessen wird, dieses bei Frequenzen von über 800 Hz um mehr als 6 dB von einem Bezugsdämm-Maß abweicht, das sich bis zu 2 000 Hz um 9 dB pro Oktave und bei höheren Frequenzen um 3 dB pro Oktave erhöht.

2. Verbundglas nach Anspruch 1, **dadurch gekennzeichnet, daß** die Kunststoffolie, welche Dämm- und/oder Steifigkeitseigenschaften verleiht, von der Folie mit gewöhnlichen Schalldämpfungseigenschaften durch eine dichte dünne Folie getrennt ist.

3. Verbundglas nach Anspruch 2, **dadurch gekennzeichnet, daß** die dichte dünne Folie auf Basis von Polyethylenterephthalat ist.

4. Verbundglas nach einem der Ansprüche 1 bis 3, **dadurch gekennzeichnet, daß** die Kunststoffolie, die Steifigkeitseigenschaften verleiht, aus einem solchen Harz bergestellt ist, daß ein Versuchsstab von 9 cm Länge und 3 cm Breite, der aus einem Verbundglas besteht, das zwei 4 mm dicke Glasscheiben umfaßt, die durch eine Schicht von 2 mm dieses Harzes miteinander verbunden sind, eine Resonanzfrequenz f_{c} der ersten Mode hat, die höchstens um 35 % von der eines Versuchsstabs aus Einscheibenglas mit derselben Länge, derselben Breite und 4 mm Dicke differiert.

5. Verbundglas nach einem der Ansprüche 1 bis 4, **dadurch gekennzeichnet, daß** die Kunststoffolie, welche Dämmeigenschaften verleiht, aus einem solchen Harz hergestellt ist, daß, wenn sie mit einer Dicke von kleiner oder gleich 1 mm in einem mehrschichtigen Aufbau mit zwei Gläsern von 2,1 mm verbunden ist, um eine Verbundglasscheibe zu bilden, deren Schalldämm-Maß gemessen wird, dieses bei Frequenzen von über 800 Hz um weniger als 6 dB von einem Bezugsdämm-Maß abweicht, das sich bis zu 2 000 Hz um 9 dB pro Oktave und bei höheren Frequenzen um 3 dB pro Oktave erhöht.

6. Verbundglas nach Anspruch 4 oder 5, **dadurch gekennzeichnet, daß** es aus einem Verbund von zwei Glasscheiben besteht, der über erfindungsgemäße Folien hergestellt ist und in welchem die Kunststoffolie, welche die Dämm- und/oder Steifigkeitseigenschaften verleiht, eine Dicke von gleich oder größer als 0,38 mm besitzt.

7. Verbundglas nach Anspruch 6, **dadurch gekennzeichnet, daß** die Folie mit gewöhnlichen Schalldämpfungseigenschaften eine Dicke von gleich oder größer als 0,38 mm besitzt.

8. Verbundglas nach Anspruch 2 oder 3, **dadurch gekennzeichnet, daß** die dichte dünne Folie auf ihrer Oberfläche eine oder mehrere dünne Schichten umfaßt, welche ihre Lichtreflexions- oder Lichttransmissionseigenschaften und/oder elektrische Leitung modifizieren.

9. Verbundglas nach einem der Ansprüche 1 bis 3, **dadurch gekennzeichnet, daß** mindestens eine der zwei transparenten starren Scheiben, insbesondere auf der Innenfläche, eine oder mehrere dünne Schichten umfaßt, die ihre Lichtreflexions- oder Lichttransmissionseigenschaften und/oder elektrische Leitung modifizieren.

10. Verwendung des Verbundglases nach Anspruch 4 zur Herstellung von Verglasungen, mit denen Gebäude ausgestattet werden sollen.

11. Verwendung des Verbundglases nach Anspruch 5 zur Herstellung von Fahrzeugverglasungen und insbesondere Autoverglasungen.

12. Verwendung einer Folie auf der Basis eines Polyvinylacetalharzes als Zwischenfolie derart in einem Verbundglas, daß ein Glas mit Dämm- und/oder Steifigkeitseigenschaften bereitgestellt wird, wobei diese Folie mit wenigstens einer Folie mit gewöhnlichen Schalldämpfungseigenschaften verbunden ist, **dadurch gekennzeichnet, daß** das Glas mindestens zwei transparente starre Scheiben mit einer Dicke von 1,6 bis 2,1 mm umfaßt, wobei die Dicke der Folie, die Dämm- und/oder Steifigkeitseigenschaften verleiht, weniger als 1,1 mm beträgt, und die Folie mit gewöhnlichen Schalldämpfungseigenschaften mechanische Festigkeitseigenschaften besitzt und eine Standard-Polyvinylbutyralfolie derart ist, daß
- entweder, wenn sie mit einer Dicke von 2 mm in einem mehrschichtigen Aufbau mit zwei Gläsern von 4 mm verbunden ist, um einen Verbund-Versuchsstab von 9 cm Länge und 3 cm Breite zu bilden, und der Versuchsstab durch einen Stoß angeregt wird, die Resonanzfrequenz f_{c} der ersten Mode um mehr als 35 % von der eines Versuchsstabs aus Einscheibenglas mit derselben Länge, derselben Breite und 4 mm Dicke differiert oder
- wenn sie mit einer Dicke von höchstens 1 mm in einem mehrschichtigen Aufbau mit zwei Gläsern von 2,1 mm verbunden ist, um eine Verbundglasscheibe zu bilden, deren Schalldämm-Maß gemessen wird, dieses bei Frequenzen von über 800 Hz um mehr als 6 dB von einem Bezugsdämm-Maß abweicht, das sich bis zu 2 000 Hz um 9 dB pro Oktave und bei höheren Frequenzen um 3 dB pro Oktave erhöht,
um die Schalldämmeigenschaften des Glases im Vergleich mit den Eigenschaften eines Glases, in welchem ein Standard-PVB verwendet wird, über den Frequenzbereich von 1 000 bis 4 000 Hz zu verbessern.
